# DEMANDE DE BREVET EUROPEEN

(11) **EP 1 835 709 A1**
(43) Date de publication de la demande: **19.09.2007**
(21) Numéro de dépôt: 07004917.6
(22) Date de dépôt: 09.03.2007
(51) Int. Cl.: H04M 11/06, H04M 1/253

(54) **Procédé de reconnaissance mutuelle entre dispositifs de téléphonie "large bande" et appareils utilisant le même procédé**

(30) Priorité: 16.03.2006 FR 0602308
(71) Demandeur: Sagem Communication S.A., 75015 Paris (FR)
(72) Inventeur: Jaulin, Jean-Philippe, 78800 Houilles (FR); Leloup, Philippe, 94130 Nogent-sur-Marne (FR)
(74) Mandataire: Maillet, Alain

(57) **Abrégé**

Protocole de reconnaissance mutuelle entre dispositifs de téléphonie "large bande". Ce protocole prend place lors des phases préalables à l'établissement de la communication, lors d'appels sortants et entrants, entre un combiné téléphonique et une passerelle de services téléphoniques, de façon à ce que tant le combiné que la passerelle n'établissent une communication "large bande" qu'en présence d'un dispositif pair doté des même capacités.

De cette façon, les capacités "large bande" dont est doté le dispositif ne sont utilisées qu'à bon escient et ne sont pas gaspillées dans l'établissement d'une communication avec un dispositif "bande étroite". Ce protocole est rétro-compatible avec les appareils existants "bande étroite", et permet l'établissement d'une communication "bande étroite" entre un appareil existant et un appareil "large bande" doté du protocole.

## Description

Domaine technique L'invention se situe dans le domaine téléphonique et plus particulièrement dans les procédés d'établissement de la communication entre un combiné et une passerelle de service téléphonique via une connexion analogique.

### Art antérieur

Le réseau téléphonique commuté (RTC) est basé sur la communication entre deux appareils de télécommunication appelés combinés téléphoniques mis en relation électrique. Le combiné communique avec le réseau par l'intermédiaire d'un câble électrique constitué d'une paire de fils de cuivre. A l'origine du système, la communication était établie par une connexion physique des combinés communiquant au moyen de commutateurs. De nos jours, les combinés sont connectés électriquement à des commutateurs électroniques et la communication est généralement acheminée sur le réseau par des moyens de communication numériques comme ATM (« Asynchronous Transfer Mode » en anglais) utilisant de la fibre optique ou autre. Seul le dernier maillon de la communication est toujours analogique et implique un combiné relié au commutateur par un câble du type paire de fils de cuivre.

Dans le cadre du développement des communications numériques et en particulier de l'interconnexion de réseau connue sous le nom d'Internet, il est de plus en plus courant que le domicile des utilisateurs soit connecté à Internet par le biais d'une passerelle. Cette passerelle peut prendre la forme d'un modem ADSL (« Asynchronous Digital Subscriber Line » en anglais) offrant une connexion haut débit numérique utilisant le câble téléphonique comme support. D'autres types de passerelles existent, que ce soit une passerelle-câble offrant la connexion haut débit via un réseau câblé dont la première fonction est généralement la diffusion de télévision, ou encore une passerelle sur courant porteur ou autres. Toutes ces passerelles permettent de fournir un point d'accès à un réseau numérique haut débit dans le domicile. Les dernières générations de ces passerelles offrent un service appelé en anglais « Triple Play » constitué du regroupement de trois services, un service de connexion donnée, un service multimédia et un service voix. Ces passerelles permettent donc à l'utilisateur de se connecter à Internet (données), de recevoir des services de type télévisuel (multimédia) et de passer des appels téléphoniques (voix). Dans le cadre du service voix, ces passerelles offrent une interface permettant de connecter un ou plusieurs combinés téléphoniques via la classique paire de fils de cuivre. Nous voyons qu'un système de téléphonie implique généralement, de nos jours, un combiné analogique connecté via un câble à une passerelle, que celle-ci soit un terminal de connexion haut débit au domicile ou le central de l'opérateur, cette passerelle ayant pour fonction d'acheminer la communication analogique sur un réseau numérique vers le destinataire.

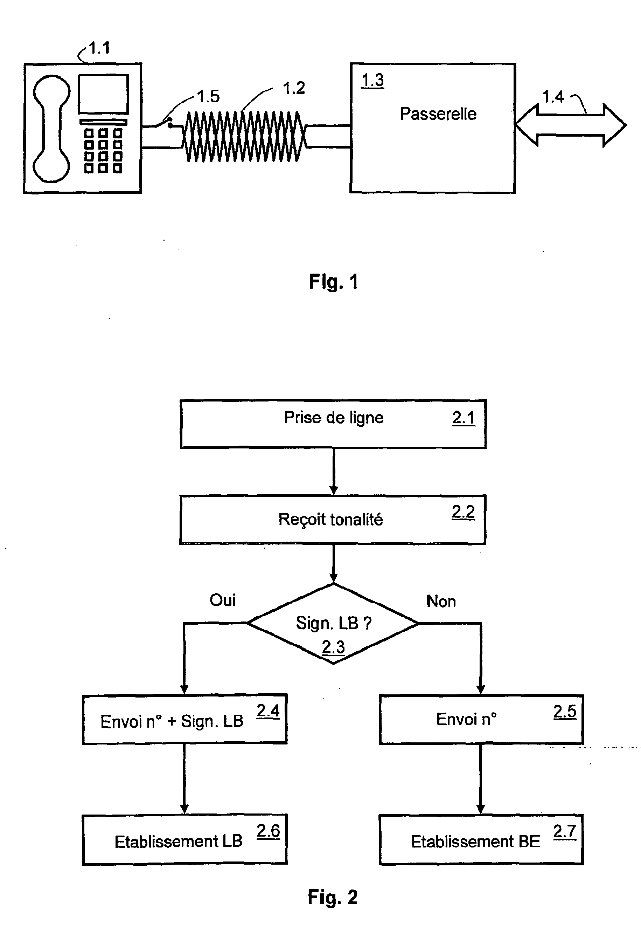

La Fig. 1 décrit un tel système dans lequel un combiné 1.1 est connecté à un réseau de communication numérique 1.4 via une passerelle 1.3. La connexion entre le combiné 1.1 et la passerelle 1.3 se fait au moyen d'un câble électrique 1.2 constitué d'une paire de conducteurs. Au repos, dans un mode dit non décroché, l'interrupteur 1.5 est ouvert. Le combiné est alors soumis à une tension électrique de 48 V et aucun courant ne passe. Lorsque l'utilisateur décroche son téléphone, cela correspond à la fermeture de l'interrupteur 1.5, et un courant de l'ordre de 40 mA s'établit entre le combiné et la passerelle. La passerelle détecte ce courant : c'est le mécanisme de prise de ligne.

Lors de l'établissement d'une communication, deux cas se présentent. Dans un premier cas, il s'agit d'un appel sortant, c'est-à-dire que la communication est initiée par l'utilisateur à l'aide de son combiné. Dans ce cas, l'utilisateur décroche et le combiné prend la ligne. La passerelle détecte la prise de ligne, acquitte la demande de connexion en superposant à la tension continue un signal sinusoïdal de 440 Hz correspondant à la note «LA»: c'est l'invitation à numéroter, la tonalité. Sur réception de cette tonalité, le combiné peut numéroter, c'est-à-dire transmettre le numéro du destinataire avec lequel il souhaite être mis en communication. Le premier système de numérotation est un système à impulsions; le combiné envoie des trains d'impulsions codant le numéro. Chaque train est composé d'impusions de 100 ms, 33,3 ms où la ligne est fermée et 66,7 ms où la ligne est ouverte. Une impulsion code le chiffre 1, deux impulsions codent le chiffre 2, etc jusqu'à dix impulsions pour le chiffre 0. Chaque train codant un chiffre est séparé du train suivant par au moins 200 ms. Ce système ancien et long tend à disparaître au profit du système dit DTMF (« Dual Tone Multi Frequency » en anglais). Le système DTMF est normalisé par l'ETSI (« European Telecommunication Standards Institute » en anglais) sous la référence « ETSI ES 201 235 - Specification of Dual Tone Multi-Frequency (DTMF) Transmitters and Receivers », partie 1 à 4. Dans ce système, les dix chiffres, les caractères spéciaux « * » et « # », ainsi que les lettres « A », « B », « C » et « D » sont rangés dans un tableau de quatre lignes et quatre colonnes. A chaque ligne est associée une fréquence (697 Hz, 770 Hz, 852 Hz et 941 Hz) et à chaque colonne également (1209 Hz, 1336 Hz, 1477 Hz et 1633 Hz). Chaque chiffre ou caractère est donc codé par un signal composé de la superposition de deux sinusoïdes dont les fréquences représentent l'indice de ligne et de colonne du chiffre ou du caractère dans le tableau. La durée de chaque signal ainsi que l'intervalle entre deux signaux sont au moins de 40 ms. Lorsqu'elle reçoit le numéro, la passerelle se charge d'établir la communication avec le destinataire.

Dans le second cas : l'appel entrant, la passerelle reçoit une requête pour établir la communication avec le combiné. Cette requête peut provenir soit d'un autre combiné connecté à la même passerelle, soit d'une autre passerelle connectée à celle-ci par le réseau numérique d'interconnexion. La passerelle signale la requête de connexion au combiné par l'envoi d'un signal de sonnerie. Ce signal de sonnerie se compose d'un signal sinusoïdal d'une fréquence d'environ 50 Hz, et de tension de 50 à 80 V, efficace par rafales, activé pendant environ 2 secondes et désactivé pendant environ 4 secondes. Ce signal est superposé à la tension continue de 48 V. Dès que le combiné décroche, c'est-à-dire qu'il prend la ligne en établissant le courant continu, la passerelle supprime le signal de sonnerie et la communication est établie.

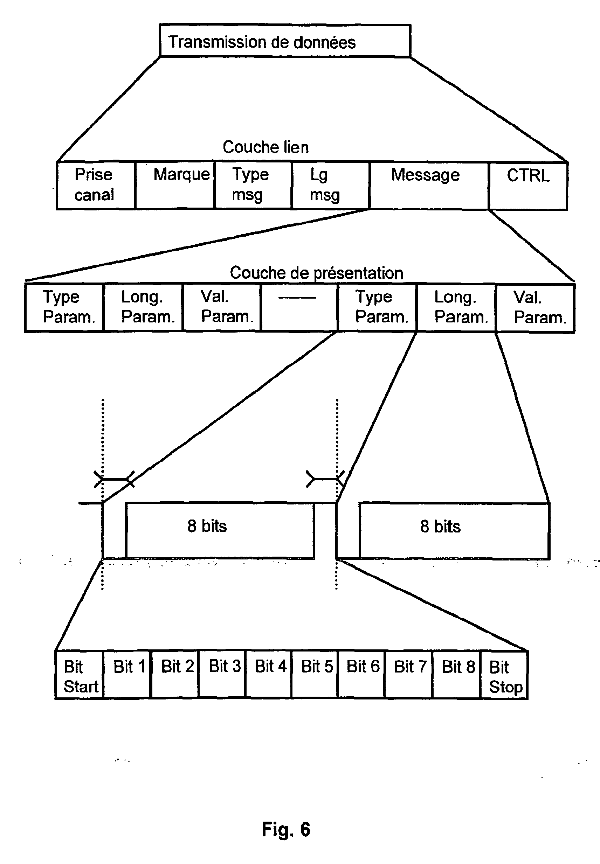

Ce schéma de fonctionnement reste à la base du fonctionnement des combinés modernes connectés à une passerelle telle qu'un modem ADSL. Cependant, dans le but d'offrir des services supplémentaires tels que l'affichage du numéro de l'appelant, un mécanisme supplémentaire de transfert de données peut se greffer sur le schéma précédemment décrit. Ce mécanisme de transfert de données, selon le protocole de la ligne de l'abonné sur la boucle locale (« Subscriber line protocol over the local loop » en anglais), est standardisé par l'ETSI sous la référence « ETSI EN 300 659 », partie 1 à 3. Ce mécanisme permet de superposer des séquences de transfert de données numériques entre la passerelle et le combiné en utilisant le mode de communication spécifié dans la recommandation V.23 de l'ITU (« International Telecommunication Union » en anglais), et correspondant à une modulation binaire à 1200 bauds. Ces séquences peuvent apparaître en mode décroché ou non, préalablement à la sonnerie, pendant la sonnerie ou même pendant une communication. Ce protocole est décomposé en trois couches, comme l'illustre la Fig. 6. On y voit qu'une séquence de transmission de données est constituée d'un message de la couche lien. Ce message comporte une première séquence de prise de canal, composée d'un bloc de 300 bits alternant des 0 et des 1, suivie d'un signal de marque composé soit d'un bloc de 180 ± 25 bits de marque, soit d'un bloc de 80 ± 25 bits de marque. Ensuite, on trouve un octet codant le type du message, un octet codant la longueur du message, le message de la couche de présentation lui-même, et il se termine par un octet de somme de contrôle. Le message de la couche de présentation est composé d'au moins un paramètre mais il peut en contenir plusieurs. Chaque paramètre est codé par au moins 3 octets ; le premier indique le type du paramètre, le second la longueur en octets du champ de valeur du paramètre qui suit et qui doit être compris entre 1 et 253, puis 1 à 253 octets suivent pour coder la valeur du paramètre. Au niveau de la couche physique, chaque octet est codé par un bit de début de valeur 1, les 8 bits composant l'octet et un bit de fin de valeur 0.

Une des utilisations les plus courantes de ce protocole est l'utilisation préalable à la sonnerie pour transmettre des données relatives à l'appel au combiné. Parmi ces données se trouve le numéro de l'appelant, entre autres. Dans ce cadre, la passerelle commence par émettre un signal appelé TAS (« Terminal Alerting Signal » en anglais). Ce signal sert à avertir le combiné qu'une séquence de transfert de données va être émise par la passerelle. Celui-ci peut donc passer dans un mode qualifié de mode d'éveil raccroché, et se préparer à recevoir la séquence de données. Celle-ci suit donc le signal TAS après un délai compris entre 45 et 500 ms. Lors de ce transfert, la passerelle transmet donc un certain nombre de paramètres au combiné. S'ensuit alors un nouveau délai sans transmission compris entre 200 et 500 ms, puis l'émission du signal de sonnerie.

Les services de téléphonie classiques, basés sur le système RTC, utilisent une bande passante de 300 Hz à 3400 Hz pour le transport de la voix. Cette bande passante est particulièrement réduite, même si elle concentre les fréquences caractéristiques de la voix humaine. Par comparaison, l'oreille capte une bande de fréquence estimée entre 20 Hz à 20000 Hz. L'étroitesse de cette bande de fréquence explique la difficulté que l'on peut avoir à reconnaître la voix d'un interlocuteur au téléphone. Il est donc envisagé d'offrir des services de téléphonie offrant une bande passante supérieure, par exemple 50 Hz - 7 kHz, et appelés services de téléphonie "large bande" par opposition aux services classiques que nous appellerons services "bande étroitc".
Pour pouvoir offrir ces services "large bande", il faut que le réseau numérique qui relie les différentes passerelles puisse offrir des communications "large bande", mais aussi que le combiné et la passerelle soient en mesure d'établir une connexion "large bande" entre eux. Il faut donc que le combiné et la passerelle soient dotés de moyens de communication "large bande". La mise en place de tels services de téléphonie "large bande" ne peut s'envisager que progressivement, étant donné l'importance de la base installée en "bande étroite". Pendant une période transitoire pouvant être longue, il faut envisager la coexistence et la coopération de dispositifs "large bande" et de dispositifs "bande étroite". D'un autre côté, la communication en large bande mobilise, tant au niveau du combiné qu'au niveau d'une passerelle, des ressources supérieures à celles mobilisées par une communication "bande étroite". On voit donc qu'il est souhaitable de prévoir des dispositifs tant combinés que des passerelles qui n'établissent de communication "large bande" et donc qui ne mobilisent leurs capacités large bande qu'en présence uniquement d'un équipement pair doté des mêmes capacités.

### Exposé de l'invention

L'invention se propose de résoudre ce problème par un protocole de rcconnaissance mutuelle entre dispositifs de téléphonie "large bande". Ce protocole prend place lors des phases préalables à l'établissement de la communication, lors d'appels sortants et entrants, entre un combiné téléphonique et une passerelle de services téléphoniques, de façon à ce que tant le combiné que la passerelle n'établissent une communication "large bande" qu'en présence d'un dispositif pair doté des mêmes capacités.

De cette façon, les capacités "large bande" dont est doté le dispositif ne sont utilisées qu'à bon escient et ne sont pas gaspillées dans l'établissement d'une communication avec un dispositif "bande étroite". Ce protocole est rétro-compatible avec les appareils existants "bande étroite", et permet l'établissement d'une communication "bande étroite" entre un appareil existant et un appareil "large bande" doté du protocole.

L'invention concerne un procédé d'établissement d'une communication sortante entre un combiné téléphonique et une passerelle de service de téléphonie comportant au moins les étapes suivantes :
- une étape de prise de ligne par le combiné;
- une étape d'émission d'une tonalité par la passerelle ;
- une étape de numérotation par le combiné ;
- une étape d'établissement de la communication par la passerelle ;
- une étape d'émission d'une signalisation "large bande" par la passerelle lorsque celle-ci est dotée de capacités "large bande";
- une étape d'émission d'une signalisation "large bande" par le combiné, en réponse à la réception d'une signalisation "large bande" émise par la passerelle, lorsque le combiné est doté de capacités "large bande" ;
et lorsque ces deux étapes d'émission d'une signalisation "large bande" ont eu lieu, la communication établie par la passerelle est une communication "large bande".

Selon un mode particulier de réalisation de l'invention, la signalisation "large bande" émise par la passerelle prend la forme d'une forme spécifique de tonalité.

Selon un mode particulier de réalisation de l'invention, la forme spécifique de tonalité consiste en la superposition du signal sinusoïdal à 440 Hz et d'un ou de plusieurs signaux sinusoïdaux.

Selon un mode particulier de réalisation de l'invention, la signalisation "large bande" émise par le combiné prend la forme d'un ou plusieurs caractères spécifiques codés en DTMF ajoutés au numéro lors de l'étape de numérotation.

Selon un mode particulier de réalisation de l'invention, la signalisation "large bande" émise par le combiné prend la forme d'une ou plusieurs fréquences supplémentaires ajoutées aux fréquences codant le numéro en DTMF lors de l'étape de numérotation.

Selon un mode particulier de réalisation de l'invention, la signalisation "large bande" émise par le combiné prend la forme d'une séquence de transfert de données émise par le combiné.

L'invention concerne également un procédé d'établissement d'une communication entrante entre un combiné téléphonique et une passerelle de services de téléphonie comportant au moins les étapes suivantes :
- une étape d'émission d'un signal de sonnerie par la passerelle;
- une étape de prise de ligne par le combiné ;
- une étape d'établissement de la communication par la passerelle ;
- une étape d'émission d'une signalisation "large bande" par la passerelle lorsque celle-ci est dotée de capacités "large bande";
- une étape d'émission d'une signalisation "large bande" par le combiné, en réponse à la réception d'une signalisation "large bande" émise par la passerelle, lorsque le combiné est doté de capacités "large bande" ;
   et lorsque ces deux étapes d'émission d'une signalisation "large bande" ont eu lieu, la communication établie par la passerelle est une communication "large bande".

Selon un mode particulier de réalisation de l'invention, la signalisation "large bande" émise par la passerelle prend la forme d'une séquence de transfert de données contenant au moins un paramètre spécifique.

Selon un mode particulier de réalisation de l'invention, la séquence de transfert de données est émise préalablement à l'émission du signal de sonnerie.

Selon un mode particulier de réalisation de l'invention, la signalisation "large bande" émise par le combiné prend la forme d'un ou plusieurs caractères codés en DTMF.

Selon un mode particulier de réalisation de l'invention, la signalisation "large bande" émise par le combiné prend la forme d'un ou plusieurs caractères codés selon une extension de DTMF.

Selon un mode particulier de réalisation de l'invention, la signalisation "large bande" émise par le combiné prend la forme d'une séquence de transfert de données.

Selon un mode particulier de réalisation de l'invention, la signalisation "large bande" émise par le combiné prend la forme d'un signal composé d'une ou plusieurs fréquences spécifiques.

Selon un mode particulier de réalisation de l'invention, la signalisation "large bande" émise par le combiné est émise juste après la prise de ligne par le combiné.

L'invention concerne aussi une passerelle de services téléphoniques dotée :
- d'une interface analogique permettant la connexion d'un combiné ;
- de capacités de communication "large bande" ;
- de moyen d'émission d'une signalisation "large bande" à destination d'un combiné connecté préalablement à l'établissement d'une communication.

L'invention concerne aussi un combiné téléphonique connectable à une passerelle de services téléphoniques via une interface analogique, et doté de capacités "large bande", caractérisé en ce qu'il comporte des moyens d'émission d'une signalisation "large bande" à destination de la passerelle à laquelle il est connecté, lorsqu'il reçoit une signalisation "large bande" de cette dernière, et préalablement à l'établissement de la connexion.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un schéma de principe d'un système RTC ;
la Fig. 2 représente un schéma des actions d'un combiné lors d'un appel sortant selon un exemple de réalisation de l'invention;
la Fig. 3 représente un schéma des actions d'un combiné lors d'un appel entrant selon un exemple de réalisation de l'invention;
la Fig. 4 représente un schéma des actions d'une passerelle lors d'un appel sortant selon un exemple de réalisation de l'invention ;
la Fig. 5 représente un schéma des actions d'une passerelle lors d'un appel entrant selon un exemple de réalisation de l'invention ;
la Fig. 6 représente la décomposition en couches du protocole de transfert de données de la ligne de l'abonné sur la boucle locale.

### Exposé détaillé de l'invention

L'invention propose un protocole permettant à deux dispositifs de téléphonie "large bande" connectés entre eux par une interface analogique, de se reconnaître mutuellement comme tels, de façon à établir une communication "large bande". Ces dispositifs "large bande", quand ils sont connectés à un dispositif classique à bande étroite, sont compatibles avec les normes en vigueur et vont établir avec ces dispositifs une communication classique dite "bande étroite".

Dans ce texte, nous parlerons de dispositifs "large bande" et de communication "large bande" pour décrire un dispositif de téléphonie doté de capacités lui permettant d'établir une communication utilisant une bande passante pour la voix supérieure à la bande des 300 à 3400 Hz. Par opposition, les dispositifs dits classiques, c'est-à-dire utilisant la bande des 300 à 3400 Hz, seront appelés dispositifs et communications "bande étroite".

L'invention est basée sur l'ajout, lors de certaines phases de communication préliminaires à l'établissement de la connexion entre deux dispositifs de téléphonie, d'informations au signal identifiant le dispositif comme étant "large bande". Une fois que l'un des dispositifs s'est identifié comme "large bande", le dispositif pair, c'est-à-dire le second dispositif avec lequel le premier cherche à établir une connexion, s'il est également doté de capacités "large bande", va également insérer, dans la phase d'échanges préliminaires, une signalisation l'identifiant comme "large bande". Ce faisant, lorsque les deux dispositifs se sont identifiés auprès de leur pair comme étant dotés de capacités "large bande", et seulement dans ce cas, une communication "large bande" est établie entre les deux. Dans le cas où un dispositif "large bande" cherche à établir une connexion avec un dispositif classique à bande étroite, la signalisation "large bande" sera soit émise et non reconnue, soit non émise, selon les cas, et une connexion "bande étroite" sera établie de manière classique.

La Fig. 2 détaille les actions effectuées par un combiné "large bande" lors d'un appel sortant. Dans une première étape 2.1, l'utilisateur décroche son combiné, entraînant une prise de ligne. D'une manière classique, cette prise de ligne est détectée par la passerelle. Nous rappelons que le terme "passerelle" est utilisé, ici, de manière générique, et peut tout aussi bien représenter un commutateur au sein du central téléphonique de l'abonné, qu'une passerelle domestique reliant le domicile de l'abonné à un réseau de communication numérique à haut débit. La passerelle détectant la prise de ligne envoie donc la tonalité pour inviter le combiné à numéroter. Dans un mode particulier de réalisation de l'invention, il est proposé qu'une passerelle dotée de capacités "large bande" se signale à ce moment-là, par l'envoi d'une tonalité spécifique qui ne doit pas perturber le fonctionnement d'un combiné ordinaire. La tonalité classique se composant d'une seule fréquence de 440 Hz, la tonalité spécifique peut être constituée de cette fréquence de 440 Hz à laquelle sont ajoutées une ou plusieurs fréquences supplémentaires définies. Un combiné ordinaire détectera la tonalité à 440 Hz ignorant les fréquences supplémentaires, tandis qu'un combiné doté de capacités "large bande" reconnaîtra les fréquences supplémentaires et détectera donc qu'il est en présence d'une passerelle "large bande". Le combiné reçoit donc la tonalité lors de l'étape 2.2 et teste la présence de la signalisation "large bande" à l'étape 2.3. En l'absence de signalisation "large bande" conjointement à la tonalité, le combiné numérote de manière classique lors de l'étape 2.5, et il s'ensuit l'établissement d'une communication "bande étroite" lors de l'étape 2.7. Par contre, dans le cas où le combiné détecte la présence d'une signalisation "large bande" envoyée conjointement à la tonalité, par exemple par superposition d'une ou plusieurs fréquences à la fréquence de tonalité de base de 440 Hz, le combiné va également se signaler comme "large bande" conjointement à la numérotation lors de l'étape 2.4. La numérotation se faisant, comme nous l'avons vu, en utilisant la technique DTMF, il est possible d'utiliser les 4 lettres codées par DTMF pour indiquer, préalablement au numéro par exemple, les capacités "large bande" du combiné. Dans un mode particulier de réalisation de l'invention, la signalisation "large bande" du combiné se fait par superposition d'une troisième fréquence aux fréquences du DTMF. Dans un autre mode particulier de réalisation de l'invention, la signalisation "large bande" du combiné est envoyée sous la forme d'une séquence de transfert de données préalablement au numéro, cette séquence permettant l'envoi d'un ou plusieurs paramètres spécifiques. Une grande liberté de choix d'implémentation existe ici, car cette signalisation n'étant envoyée par le combiné que dans le cas où il a détecté, par la réception d'une tonalité spécifique, les capacités "large bande" de la passerelle, cette phase de communication s'effectue obligatoirement entre un combiné "large bande" et une passerelle "large bande". Le problème de la compatibilité avec les appareils ordinaires n'existe donc pas. Que la signalisation "large bande" du combiné soit envoyée par l'intermédiaire d'une troisième fréquence par l'ajout d'une séquence de caractères spécifiques en début ou en fin de numéro, ou par tout autre moyen, il s'ensuit l'établissement d'une communication "large bande" à l'étape 2.6.

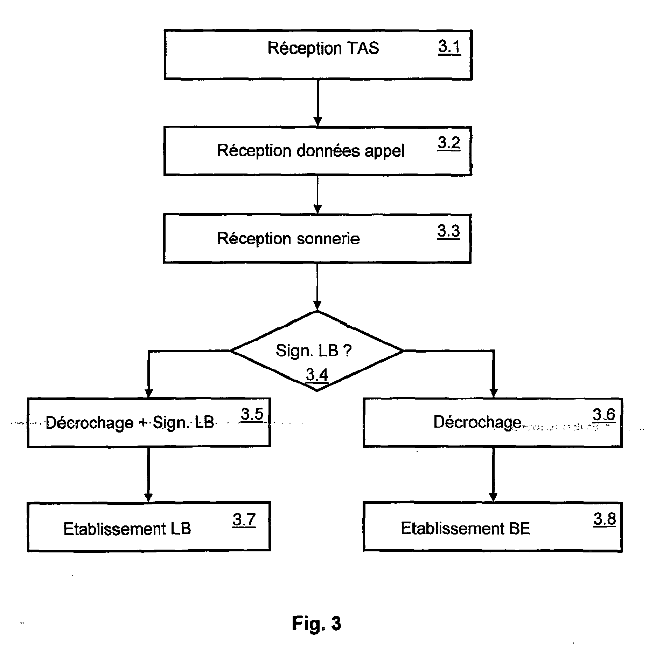

La Fig. 3 illustre le fonctionnement d'un combiné "large bande" dans le cas d'un appel entrant. La figure illustre le cas où l'appel est précédé de l'envoi, grâce au protocole de transfert de données, d'informations relatives à l'appel, préalablement à la sonnerie. Evidemment, dans le cas où le signal de sonnerie arrive directement, le schéma démarre simplement à l'étape 3.3. Le combiné étant supposé dans l'état de repos, l'étape 3.1 illustre la réception d'un signal TAS. Sur réception de ce signal, le terminal passe en mode d'éveil non décroché et se prépare à recevoir des données selon la recommandation V.23 de l'ITU. Lors de l'étape 3.2, le combiné reçoit donc un ensemble de paramètres concernant l'appel entrant. Parmi ces paramètres se trouve généralement le numéro de l'appelant. Selon un mode particulier de réalisation de l'invention, dans le cas d'une passerelle "large bande", celle-ci ajoutera lors de cette séquence de transfert de données, une signalisation indiquant ses capacités "large bande". Cette signalisation peut, par exemple, prendre la forme d'un paramètre particulier précisant sa nature "large bande". Comme indiqué dans la norme « ETSI EN 300 659 », un combiné ordinaire recevant ces paramètres dont il ignore le type, se contente de les ignorer. Le fonctionnement d'un combiné ordinaire n'est donc pas affecté par ce mode de réalisation de l'invention. A l'étape suivante, 3.3, le combiné reçoit le signal de sonnerie suivant la séquence de transfert de données. A ce moment, lorsque l'utilisateur décide de répondre et décroche son combiné, se produit une étape 3.6 de décrochage ordinaire, si aucune signalisation "large bande" n'a été reçue lors de la réception des données, et s'ensuit l'établissement d'une communication "bande étroite" lors de l'étape 3.8. Tandis que, lorsque la signalisation "large bande" a été reçue, et lorsque l'utilisateur décroche son combiné, celui-ci va envoyer à son tour une signalisation de large bande. Celle-ci peut prendre diverses formes. En effet, ici encore, toute latitude est permise car il n'y a pas de contrainte de compatibilité. Dans un mode de réalisation de l'invention, cette signalisation prend la forme d'un ou de plusieurs caractères inusités envoyés sous forme DTMF. En effet, nous avons vu que le mécanisme DTMF offre le codage des 4 lettres « A », « B », « C » et « D ». Dans un autre mode de réalisation de l'invention, cette signalisation prend la forme d'un ou plusieurs caractères encodés selon une extension du DTMF intégrant une troisième fréquence ou utilisant d'autres fréquences. Une autre forme de réalisation peut également prévoir l'émission d'une séquence de données en utilisant le format des séquences de transfert de données du protocole de la ligne d'abonné comme pour le transfert des données d'appel. Quel que soit le choix adopté pour l'envoi de cette signalisation, envoyée suite au décrochage dans l'étape 3.5, il s'ensuit l'établissement d'une communication "large bande" lors de l'étape 3.7.

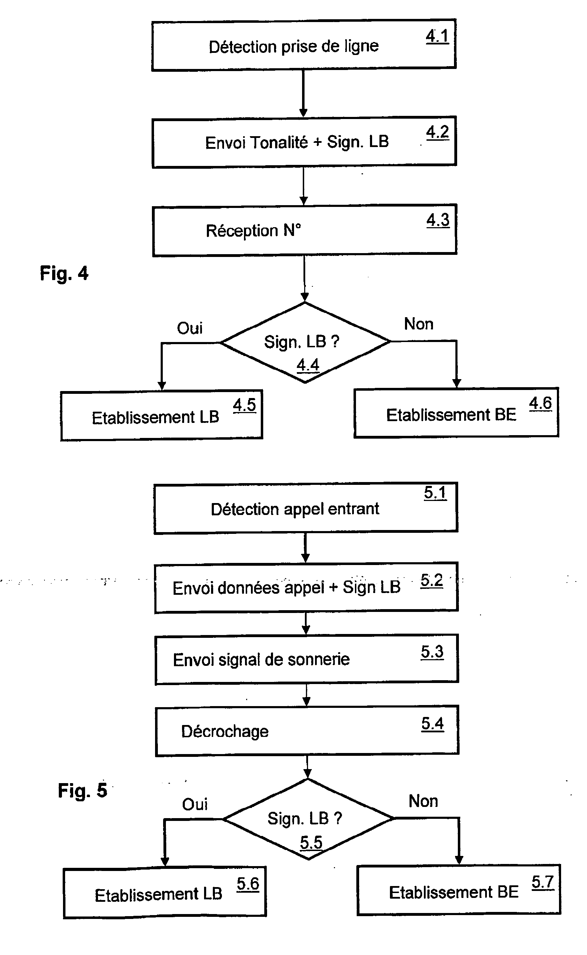

La Fig. 4 illustre quant à elle le fonctionnement d'une passerelle "large bande" lors d'un appel sortant. Lors de l'étape 4.1, la passerelle détecte la prise de ligne par le combiné. La passerelle envoie alors, étape 4.2, la tonalité spécifique, c'est-à-dire la tonalité agrémentée de la signalisation "large bande", comme précédemment décrit. La passerelle reçoit alors le numéro composé par le combiné lors de l'étape 4.4. Conjointement à ce numéro peut avoir été envoyée par le combiné, s'il est "large bande", une signalisation "large bande". Dans le cas où cette signalisation n'est pas présente, la communication est établie en bande étroite à l'étape 4.6. Dans le cas contraire, la communication est établie en large bande lors de l'étape 4.5.

La Fig. 5 illustre le comportement de la passerelle lors d'un appel entrant. Lors de l'étape 5.1, la passerelle détecte une requête d'appel entrant qui peut venir soit d'un autre combiné dans le cas d'une communication interne par exemple, soit d'une autre passerelle connectée à la première via le réseau de communication. La passerelle initie alors, lors de l'étape 5.2, l'envoi d'une séquence de transfert de données selon le protocole de ligne d'abonné. Cette séquence de transfert de données contiendra généralement l'information sur l'appelant mais surtout la signalisation "large bande". Cette signalisation peut prendre la forme d'un ou plusieurs paramètres particuliers insérés dans la séquence, ou encore la forme d'une séquence particulière rajoutée. Ensuite, la passerelle envoie le signal de sonnerie lors de l'étape 5.3 et attend le décrochage du combiné. Lorsqu'elle détecte ce décrochage lors de l'étape 5.4, elle détecte la présence ou non d'une signalisation "large bande" envoyée par le combiné suite au décrochage lors de l'étape 5.5. En l'absence de signalisation "large bande" envoyée par le combiné, la passerelle établit une communication "bande étroite" lors de l'étape 5.7, tandis que, dans le cas contraire, elle établit une communication "large bande" à l'étape 5.6.

On voit donc que l'invention consiste à transmettre, lors de la phase préalable à l'établissement de la communication entre un combiné et une passerelle, une signalisation "large bande" émise par la passerelle lorsque celle-ci possède des capacités "large bande". Un combiné "large bande" va également transmettre en retour, lorsqu'il reçoit cette signalisation, et seulement lorsqu'il la reçoit, une signalisation "large bande" à destination de la passerelle. Suite à cet échange de signalisation, les deux appareils se sont identifiés l'un à l'autre comme étant "large bande", et vont donc établir la communication en mode "large bande". On voit que si l'un des deux appareils n'est pas "large bande", la phase d'échanges préalables à l'établissement de la communication se déroule de manière classique et conduit à l'établissement d'une communication "bande étroite", même dans le cas où l'un des deux appareils est doté de capacités "large bande". De ce fait, aucun des appareils ne se retrouve à établir une communication "large bande" avec un appareil "bande étroite", ce qui résulterait en une perte des ressources pour l'appareil "large bande".

La signalisation "large bande" peut prendre la forme d'une fréquence supplémentaire ajoutée à un signal déjà transmis, mais également être constituée de paramètres transmis de manière numérique. En fait, tout moyen de transmettre une information à l'autre appareil peut être utilisé. De même, la description envisage la discrimination entre deux types de communication, "large bande" et "bande étroite". Il est évident que si d'autres types de communication sont mis en place, il est alors possible de transmettre une signalisation relative aux différents modes de communication connus par chaque appareil. On peut penser à divers modes utilisant des bandes de fréquences plus ou moins larges. Dans ce cas, la signalisation peut transmettre soit tous les modes compatibles avec l'appareil, soit le meilleur mode dont l'appareil est capable, la communication étant alors établie dans le meilleur mode compatible aux deux appareils.

## Revendications

1. Procédé d'établissement d'une communication sortante, entre un combiné téléphonique et une passerelle de services de téléphonie, comportant au moins les étapes suivantes :
- une étape de prise de ligne par le combiné ;
- une étape d'émission d'une tonalité par la passerelle;
- une étape de numérotation par le combiné ;
- une étape d'établissement de la communication par la passerelle;
**caractérisé en ce qu'**il comporte, en outre:
- une étape d'émission d'une signalisation "large bande" par la passerelle lorsque celle-ci est dotée de capacités "large bande" ;
- une étape d'émission d'une signalisation "large bande" par le combiné, en réponse à la réception d'une signalisation "large bande" émise par la passerelle, lorsque le combiné est doté de capacités "large bande" ;
et que, lorsque ces deux étapes d'émission d'une signalisation "large bande" ont eu lieu, la communication établie par la passerelle est une communication "large bande".

2. Procédé selon la revendication 1 où la signalisation "large bande" émise par la passerelle prend la forme d'une forme spécifique de tonalité.

3. Procédé selon la revendication 2 où la forme spécifique de tonalité consiste en la superposition du signal sinusoïdal à 440 Hz et d'un ou de plusieurs signaux sinusoïdaux.

4. Procédé selon la revendication 1 où la signalisation "large bande" émise par le combiné prend la forme d'un ou plusieurs caractères spécifiques codés en DTMF ajoutés au numéro lors de l'étape de numérotation.

5. Procédé selon la revendication 1 où la signalisation "large bande" émise par le combiné prend la forme d'une ou plusieurs fréquences supplémentaires ajoutées aux fréquences codant le numéro en DTMF lors de l'étape de numérotation.

6. Procédé selon la revendication 1 où la signalisation "large bande" émise par le combiné prend la forme d'une séquence de transfert de données émise par le combiné.

7. Procédé d'établissement d'une communication entrante entre un combiné téléphonique et une passerelle de services de téléphonie, comportant au moins les étapes suivantes :
- une étape d'émission d'un signal de sonnerie par la passerelle;
- une étape de prise de ligne par le combiné ;
- une étape d'établissement de la communication par la passerelle ;
**caractérisé en ce qu'**il comporte, en outre :
- une étape d'émission d'une signalisation "large bande" par la passerelle lorsque celle-ci est dotée de capacités "large bande" ;
- une étape d'émission d'une signalisation "large bande" par le combiné, en réponse à la réception d'une signalisation "large bande" émise par la passerelle, lorsque le combiné est doté de capacités "large bande";
et que, lorsque ces deux étapes d'émission d'une signalisation "large bande" ont eu lieu, la communication établie par la passerelle est une communication "large bande".

8. Procédé selon la revendication 7 où la signalisation "large bande" émise par la passerelle prend la forme d'une séquence de transfert de données contenant au moins un paramètre spécifique.

9. Procédé selon la revendication 8 où la séquence de transfert de données est émise préalablement à l'émission du signal de sonnerie.

10. Procédé selon la revendication 7 où la signalisation "large bande" émise par le combiné prend la forme d'un ou plusieurs caractères codés en DTMF.

11. Procédé selon la revendication 7 où la signalisation "large bande" émise par le combiné prend la forme d'un ou plusieurs caractères codés selon une extension de DTMF.

12. Procédé selon la revendication 7 où la signalisation "large bande" émise par le combiné prend la forme d'une séquence de transfert de données.

13. Procédé selon la revendication 7 où la signalisation "large bande" émise par le combiné prend la forme d'un signal composé d'une ou plusieurs fréquences spécifiques.

14. Procédé selon l'une des revendications 10 à 13 où la signalisation "large bande" émise par le combiné est émise juste après la prise de ligne par le combiné.

15. Passerelle de services téléphoniques dotée :
- d'une interface analogique permettant la connexion d'un combiné ;
- de capacités de communication "large bande" ;
**caractérisée en ce qu'**elle est dotée, en outre :
- de moyens d'émission d'une signalisation "large bande" à destination d'un combiné connecté préalablement à l'établissement d'une communication ;
- de moyens de réception d'une signalisation « large bande » d'un combiné en réponse à la signalisation « large bande » émise.

16. Combiné téléphonique connectable à une passerelle de services téléphoniques via une interface analogique et doté de capacités "large bande", **caractérisé en ce qu'**il comporte des moyens d'émission d'une signalisation "large bande" à destination de la passerelle à laquelle il est connecté, lorsqu'il reçoit une signalisation "large bande" de cette dernière, et préalablement à l'établissement de la connexion.
